# EUROPÄISCHE PATENTSCHRIFT

(11) **EP 2 949 633 B1**
(45) Veröffentlichungstag und Bekanntmachung des Hinweises auf die Patenterteilung: **24.04.2019**
(21) Anmeldenummer: 14169961.1
(22) Anmeldetag: 27.05.2014
(51) Int. Cl.: C04B 35/443

(54) **Transparente Spinellkeramiken und Verfahren zu ihrer Herstellung**
Transparent spinel ceramics and method for their preparation
Céramiques de Spinelle transparentes et leur procédé de fabrication

(43) Veröffentlichungstag der Anmeldung: 02.12.2015
(73) Patentinhaber: Fraunhofer-Gesellschaft zur Förderung der angewandten Forschung e.V., 80686 München (DE)
(72) Erfinder: Hutzler, Thomas, 01187 Dresden (DE); Krell, Andreas, 01189 Dresden (DE)
(74) Vertreter: Rauschenbach, Marion

(56) Entgegenhaltungen:
- CN-A- 101 265 082
- DE-A1-102009 046 036
- US-A- 3 567 472
- BRATTON R J: "Translucent Sintered MgAl2O4", JOURNAL OF THE AMERICAN CERAMIC SOCIETY,, Bd. 57, Nr. 7, 1. Juli 1974 (1974-07-01), Seiten 283-286, XP001266564,

## Beschreibung

Die Erfindung bezieht sich auf das Gebiet der technischen Keramik und betrifft transparente Spinellkeramiken, wie sie beispielsweise für Verwendungen mit erhöhter mechanischer Beanspruchung, z. B. als Schutzkeramik, oder mit erhöhten optischen Qualitätsanforderungen, z.B. für optische Geräte, zum Einsatz kommen können, und Verfahren zu ihrer Herstellung.

Es besteht bereits seit langem der Wunsch nach einer transparenten Keramik, die die vorteilhaften Eigenschaften einer Keramik, beispielsweise hinsichtlich Härte und Festigkeit, mit größtmöglicher Transparenz verbindet. Bisher ist dies jedoch trotz längerer und intensiver Bemühungen der Fachwelt nicht im gewünschten Maße gelungen. Hinzu kommt, dass die erreichten Ergebnisse aufgrund unterschiedlichster Definitionen der gewünschten Kriterien häufig nicht vergleichbar sind, so dass der tatsächliche Kenntnisstand zu transparenter Keramik zumindest ungeordnet und unübersichtlich ist.

Dementsprechend werden nachfolgend Begriffe erläutert und definiert, wie sie im Rahmen dieser Erfindung und auch in Bezug auf den angeführten Stand der Technik gelten sollen.

Die Begriffe "transparent" und "transluzent" sind im Stand der Technik nicht klar voneinander abgegrenzt. Daher sollen nachfolgend unter transparenten Materialien solche verstanden werden, die bei Dicken > 1 mm und sichtbaren Wellenlängen um 600 nm eine In-Line-Transmission von mehr als 50 % zeigen.

Für die Bemessung der klaren Durchsichtigkeit (Transparenz) von Materialien ist die zwecks Ausschluss von Streulicht aus der erfassten Intensität mit engem Aperturwinkel von ca. 0,5° zu messende "wahre" (real) In-Line-Transmission (RIT), wie sie z.B. in der EP 1053983 A (Yamamoto u.a.) oder von Apetz u.a., J. Am. Ceram. Soc. 86 (2003) 480 beschrieben worden ist, die verantwortliche Größe. Der Unterschied zwischen RIT und der mit üblichen Spektrometern, die laut Apetz mit einem effektiven Aperturwinkel von 3-5° arbeiten, ermittelten In-Line-Transmission ist naturgemäß besonders groß bei kürzeren (zu stärkeren Streuverlusten führenden) Wellenlängen, wie auch über den gesamten sichtbaren Bereich, während diese messtechnische Unterscheidung im Infrarotbereich keine Rolle spielt.

Im Fall fehlender oder äußerst geringer Licht-Absorption wird die Transmission für optisch homogene Werkstoffe, wie Glas oder für Einkristalle, nur von der materialspezifischen, vom Brechungsindex n bestimmten Reflexion R_{S} = ((n-1)/(n+1))² an jeweils Vorder- und Rückseite begrenzt. Der daraus resultierende theoretische Höchstwert der Transmission Tₘₐₓ ist für hochtransparente Stoffe unter Berücksichtigung der Mehrfachreflexion Tₘₐₓ = (1-R) mit R = 2R_{S}/(1+R_{S}) oder Tₘₐₓ = (1-R_{S})² für Materialien geringer Transparenz, das heißt, vernachlässigbarer Mehrfachreflexion; Tₘₐₓ beträgt für MgO·Al₂O₃-Spinelle, deren Brechungsindex im sichtbaren Bereich bei 1,712 bis 1,736 liegt, ca. 86,9 %.

Als besonderer Vorteil sehr hoher RIT für ein flexibles, an die jeweiligen Anwendungen angepasstes Design der transparenten Produkte, ist zu vermerken, dass bei Annäherung an das theoretische Maximum Tₘₐₓ der Dickeneinfluss schwindet, während umgekehrt eventuelle größere Streuverluste naturgemäß mit der Dicke des lichtstreuenden Materials zunehmen und die Durchsichtigkeit dann nur noch für sehr dünne Komponenten gewährleistet ist.

Somit ist ein solcher Dickeneinfluss ein Kriterium dafür, dass erhebliche Lichtstreuung - also niedrige Transparenz - vorliegt und eventuelle hohe Transmissionswerte auf einen zu großen, die Messung der wahren In-Line-Transmission unmöglich machenden Aperturwinkel zurückgehen.

Abgesehen von eventueller Absorption wird RIT beim Lichtdurchgang durch die Gefüge gesinterter *polykristalliner* Keramiken meist durch folgende Prozesse gegenüber Tₘₐₓ gemindert:
1. diffuse Streuung an Poren (abhängig von Größe und Anzahl der Poren), und
2. speziell in nicht-kubischen Keramiken, wie Korund (α-Al₂O₃), zusätzliche Lichtstreuung durch Doppelbrechung bei jedem Übergang des Lichtstrahls von einem in den nächsten Kristallit des Gefüges.
Die Streuverluste müssen daher in allen Sinterkeramiken durch möglichst geringe Rest-Porosität von < 0,1 %, vorzugsweise < 0,01 %, und durch Porengrößen, die möglichst kleiner sind, als die Wellenlänge des Lichtes, gering gehalten werden.

Da in kubischen Sinterkeramiken nur der erstgenannte Streumechanismus auftritt, unterliegt deren Transparenz im Gegensatz zu Keramiken mit doppelbrechenden (nicht-kubischen) Kristalliten keinem unmittelbaren Korngrößeneinfluss. Diese in Abhängigkeit von der Kristallstruktur unterschiedliche Situation macht verständlich, weshalb für transparente Anwendungen Keramiken mit kubischem Kristallgitter bevorzugt sind und härtere oder auch festere nicht-kubische Keramiken, wie die bei größeren Dicken nur transluzenten Sinterkorund- oder tetragonalen ZrO₂-Keramiken, eine nur untergeordnete Rolle spielen: die fortgeschrittensten, das heißt feinkörnigsten und porenärmsten Sinterkorunde (trigonal) weisen bisher bei Dicken ≥ 1 mm keine RIT > 70 % auf, wobei tetragonale ZrO₂-Keramiken noch geringere Transparenz aufweisen, während z.B. für MgO·Al₂O₃-Spinell (kubisch) wiederholt Messwerte zwischen 80 und 85 %, selbst bei größeren Dicken und somit näher dem oben genannten theoretischen Maximum, angegeben wurden.

Allerdings zeigen die meisten gemäß dem Stand der Technik bekannten kubischen Transparentkeramiken eher niedrigere Werte von Härte, Kratzbeständigkeit und Festigkeit. Verbesserungen dieser mechanischen Eigenschaften sind nur auf dem Wege verringerter Korngröße der Sintergefüge möglich. Ein Beispiel dafür ist nach der US 7247589 A (Krell u.a.) bekannt, wobei Entwicklungen dieser Art bisher Grenzen dadurch gesetzt wurden, dass solch feinkristalline Sintergefüge mit mittleren Korngrößen < 10 µm oder sogar < 1 µm nur bei niedrigen Herstellungstemperaturen realisierbar sind. Unterhalb gewisser Sintertemperaturen gerät dies allerdings in Konflikt mit der oben genannten Forderung nach minimaler Restporosität oder nach hohen relativen Sinterdichten > 99,9 % oder vorzugsweise > 99,99 % und führt dann zu zwar feinkörnigem Gefüge mit jedoch verminderter Transparenz oder sogar sichtbaren Defekten, oft in Form unvollständig versinterter Teilbereiche der Gefüge.

Neben diversen Bemühungen um optimierte (auch druckunterstützte) Sinterregime, wie z.B. in EP 0332393 A (Shibata et al.) beschrieben, ist auch versucht worden, das Problem des Dichtsinterns transparenter Spinellkeramik durch den Einsatz immer feinerer Nanopulver zu lösen (J. Zhang u.a. J. Phys. D: Appl. Phys. 42 (2009)5, 2002-2006) oder durch Änderung der Stöchiometrie (EP 1873129 A, Sasame u.a.). Die optische Qualität bleibt jedoch bisher gerade im Bereich sichtbaren Lichtes unbefriedigend.

Besondere Aufmerksamkeit wird deshalb seit längerem der Optimierung sinterfördernder und dabei möglichst auch temperatursenkender und auf diesem Wege kornwachstumsmindernder Dotierungen gewidmet. Am bekanntesten zur Herstellung lichtdurchlässiger Spinellkeramik sind die weltumspannenden Versuche mit flüssigphasenbildenden Dotierungen, in einem frühen Beispiel mit 0,25 Ma.-% CaO (R.J. Bratton, J. Ceram. Soc. 57 (1974) 7, 283-286). Beschrieben wird die Herstellung einer transluzenten Spinellkeramik mit In-Line-Transmission < 40 % für 0.37-0.95mm dünne Proben im sichtbaren Bereich. Spätere Entwicklungen verstärkten den Effekt des Flüssigphasensinterns vor allem mit LiF-Dotierung (US 2011/0028303 A. Villalobos u.a.), was jedoch typischerweise zur Bildung sichtbarer Defekte führt (G. Gilde u.a., J. Am. Ceram. Soc. 88 (2005) 10, 2747). Vermutlich können diese Defekte im Rahmen solchen Flüssigphasensinterns zwar minimiert, nicht aber vermieden werden.

Dies ist der Hintergrund zunehmender Bemühungen um Dotierungen, die für transparente Spinellkeramik möglichst im Rahmen reinen Festphasensinterns oder unter Minimierung des Auftretens flüssiger Phasen ähnliches leisten sollen, was die seit Jahrzehnten bekannte MgO-Dotierung beim Sintern von Al₂O₃-Keramik bewirkt: einerseits eine Beförderung der Diffusion und dadurch des Dichtsinterns durch atomare Wirkung einer festen Lösung von Teilen der Dotierung im Gitter der Hauptphase der Keramik, andererseits aber auch eine Minderung von deren Kornwachstum durch Zweitphasenpartikel in den Korngrenzen, wie von Peelen beschrieben (J.G. J. Peelen, Dissertation, TH Eindhoven, 1977). Mit Blick auf die Verbindung hoher Transparenz mit möglichster Feinkörnigkeit der Gefüge als Voraussetzung für verbesserte mechanische Eigenschaften sind hier vor allem folgende Beispiele zu nennen.

K. Tsukuma, J. Ceram. Soc. Japan 114 (2006) 10, 802-806 erzielte mit einer Dotierung von 0,015-0,150 Ma.-% B₂O₃ eine erhebliche Senkung der Sintertemperatur, gibt aber Transmissionswerte von um 83 % bei 600-650 nm Wellenlänge für nur 1 mm dünne Proben an, so dass eine nur begrenzte Transparenzverbesserung zu vermuten ist. Aussagen zur Häufigkeit und Größe verbleibender sichtbarer Defekte werden nicht gemacht, jedoch sind solche Defekte zu vermuten, falls die Senkung der Sintertemperatur ähnlich wie im Fall der o.a. LiF-Dotierung auf der bei B₂O₃-Zusatz zu vermutenden Bildung lokaler flüssiger Phasen beruht.

Nach EP 2112127 A1 (A. Ikesue) sind sehr hohe Transmissionswerte nahe dem theoretischen Limit für 10 mm dicke Sinterspinellproben bekannt, die durch heißisostatisches Pressen (HIP) bei hoher Temperatur (1780 °C) unter Zusatz einer MgF₂/AlF₃-Kodotierung erzeugt wurden. Die wirkliche Ursache der erzielten Transparenz ist aber unklar: es ist den Autoren trotz jahrelanger Bemühungen nicht gelungen, die in der Patentanmeldung offenbarten Ergebnisse zu reproduzieren. Auch ist kein erfolgreiches Aufgreifen dieser Dotierung durch andere Autoren bekannt geworden.

Gemäß der FR 0334760 B1 (P. Bergez u.a.) ist ein Zusatz von 0,5 -5 Ma.-% MgO bekannt, der möglichst schon im Zuge der Synthese des Spinellpulvers beigegeben werden soll und keine eigentliche Sinterdotierung im obigen Sinne darstellt, da der MgO-Überschuss nur den bekannten Effekt des Verdampfens von MgO aus dem Spinellgitter bei hohen Sintertemperaturen ausgleichen soll. Es sind aber zahlreiche Publikationen bekannt, die auch ohne einen solchen MgO-Überschuss eine ähnliche Transparenz von ca. 80 % bei 600-650 nm Wellenlänge für 3 mm dicke Proben, wie gemäß FR 0334760 B1, realisieren.

Eine besonders breite Palette von Dotierungszusätzen zu Spinell ist von Sarkar u.a., Ceram. Int. 29 (2003) 1, 55-59 untersucht worden, allerdings *ohne* Bezug zu *transparenten* Keramik-Qualitäten. Zusätze von TiO₂, V₂O₅, Cr₂O₃ sowie B₂O₃ wurden in ihrer Wirkung auf das reaktive Sintern von MgO/Al₂O₃-Mischungen beschrieben, wobei nur TiO₂ eine positive Wirkung zeigte und die Wirkung auf das Sintern vorkalzinierter Spinellpulver unbekannt bleibt. Die in dieser Veröffentlichung angeführte Literatur-Übersicht spricht auch Y₂O₃- und andere Seltenerd-Dotierungen sowie MnO₂ an, allerdings ebenfalls ohne Bezug auf die Herstellung *transparenter* Keramiken.

Während einerseits TiO₂-Dotierungen zu Sinterspinell immer wieder diskutiert wurden, scheint die alleinige Wirkung von TiO₂ für befriedigende Transparenz unzureichend. So sind nach FR 2917404 B1 (Bernard-Granger u.a.) Ko-Dotierungen von TiO₂ mit mindestens einem aus der Gruppe von ZrO₂, CaO und MgO auszuwählenden weiteren Zusatz bekannt. Diese Dotierung soll dann universell die Transparenz ganz unterschiedlicher Keramiken aus MgAl₂O₄-Spinell, kubischen ZrO₂ oder auch Y-Al-Granat (Y₃Al₅O₁₂) verbessern. Diese universelle Wirksamkeit könnte auf die Bildung einer flüssigen Phase deuten, was dann allerdings mit einem Risiko für oben angesprochene Nachteile des Flüssigphasensinterns von Transparentkeramiken verbunden wäre. Das Ausführungsbeispiel zum Spinell nennt eine recht hohe In-Line-Transmission von 84,8 %, allerdings für eine nur 1,3 mm dünne Probe, so dass auch hier eine eher begrenzte Transparenzverbesserung zu vermuten ist. Aussagen zur Häufigkeit und Größe verbleibender sichtbarer Defekte werden auch hier nicht gemacht.

Ein ähnlicher Versuch der Ko-Dotierung zur Verbesserung des Dichtsinterns wurde nach Tsai, u.a., Mater. Sci. Eng. B177 (2012)13, 1133-1137, durch Kombination von TiO₂ und CoCO₃ beschrieben, allerdings ohne dass ein klarer Vorteil dieser Dotierung dargestellt wurde.

Die Wirkung von ZrO₂-Dotierungen auf die reaktive Bildung von Spinell aus MgO/Al₂O₃-Mischungen und auf das Dichtsinterverhalten wurde - ohne Bezug auf Lichtdurchlässigkeit - von J. Kim, Ph.D.-Dissertation, Case Western Reserve University, 1992, untersucht. Danach verringern ZrO₂-Dotierungen die Sinterrate des Spinells und fördern im Fall Al-reicher Zusammensetzungen die Bildung von Al₂O₃-Ausscheidungen. Beides läuft dem Ziel verbesserter In-Line-Transmission und der Minimierung sichtbarer Defekte zuwider.

Eine der frühesten Dotierungsuntersuchungen für lichtdurchlässige Spinellkeramik wurde von R.J. Bratton, J. Am. Ceram. Soc. 57 (1974) 7, 283-286 mit 0,25 % CaO-Zugabe durchgeführt, konnte aber im sichtbaren Wellenlängenbereich keine Transmission > 40 % erwirken, das Material blieb transluzent. Später untersuchten Huang u.a., J. Am. Ceram. Soc. 80 (1997) 12, 3237-3241 die Wirkung von CaCO₃ auf das Dichtsintern von Spinell als Ko-Dotierung zu LiF, jedoch ohne die Zielsetzung von Transparenz. Eigene Versuche mit ≥ 0,2 Ma.-% CaO-Dotierung zeigten, dass auf diese Weise zwar die Sintertemperatur gesenkt und recht feinkörnige transparente Spinellgefüge gebildet werden können, jedoch auf Kosten einer um mehrere Prozent verminderten wahren In-Line-Transmission RIT und verbunden mit der Bildung sichtbarer Defekte im Volumen der transparenten Keramik. Die teilweise dendritische Struktur dieser Defekte lässt dabei darauf schließen, dass auch solche CaO-Dotierungen ihre temperatursenkende Wirkung durch Bildung lokaler flüssiger Phasen erzielen - in Konflikt mit der notwendigen Einphasigkeit defektfreier Transparentkeramik, in der Ausscheidungen fremder Phasen mit abweichendem Brechungsindex nur dann toleriert werden, wenn deren Größe klein ist im Vergleich zu den kürzeren Wellenlängen des Lichtspektrums.

Aus der Erdalkaligruppe des Periodensystems der Elemente sind sogenannte "BAM"-Leuchtstoffe ("phosphors") der Formel BaMgAl₁₀O₁₇ bekannt, die üblicherweise mit Europium oder Strontium dotiert sind (US 5611959 A). Die Existenz solcher Verbindungen sagt aber nichts über eine eventuelle Wirkung von Ba, Sr oder Eu als Sinterzusatz zu Mg-Al-Spinellkeramiken. Und wenn nach DE 10 2012 220 257 A1 eine transparente Spinellkeramik bekannt ist, die u.a. eines der Oxide aus Europium, Barium oder Kombinationen daraus oder aus 10 weiteren ohne Begründung aufgelisteten Elementen enthalten kann, die geforderte Transparenz aber an ein Kornwachstum auf mittlere Werte von > 10 µm gebunden ist und auch für keine der Dotierungen Verfahren, Wirkungen oder Ergebnisse angegeben werden, so offenbart auch diese Veröffentlichung keine Lehre zur Fertigung einer feinkristallinen Spinellkeramik hoher Transparenz.

Die Orientierungslosigkeit der Entwickler bei der Suche nach sinterfördernden Dotierungen illustriert auch US 7799267 B2, wenn dort für die spezielle Technologie der "Tape Casting Slurry Materials for Manufacture of Transparent Ceramic Materials" die Herstellung von transparenter Spinellkeramik, ebenso wie von transparentem Y-Al-Granat, Ce₂O₃, Y₂O₃, Sc₂O₃ und Lu₂O₃ ausschließlich mittels TEOS-Zusatz (Tetraethylorthosilicat, auch Tetraethoxysilan) beschrieben wird, im Vorspann aber ohne jede Begründung, Referenz oder Nachweis eines Eigenschaftsergebnisses einerseits angemerkt wird, dass man als "sintering aids" potenziell auch "oxides such as *but not limited* to lithium oxide, titanium oxide, zirconium oxide, barium oxide, calcium oxide, magnesium oxide, strontium oxide, boron oxide and mixtures thereof", also eigentlich Beliebiges, verwenden könne - während dieser potenziellen Breite an Möglichkeiten aber anderseits realbeschriebene Sintertemperaturen gegenüberstehen, die mit 1700 °C im Spinell-Beispiel (ohne mitgeteiltes Transparenzergebnis) und noch höheren Temperaturen für andere Keramiken entmutigend hoch sind, die Herstellung feinkristalliner Gefüge ausschließen und dennoch nur begrenzte Transparenz ermöglichen: Vermutlich auf Grund der für das beschriebene Foliengießen erforderlichen hohen Gehalte an organischen Zusätzen ist in US 7799267 B2 als einziges Transmissionsergebnis 81.20 - 81.27% für eine 2.7mm dicke YAG-Keramik bei 600-650 nm Wellenlänge angegeben.

Weiter sind aus der DE 10 2009 046 036 A1 ein Verfahren zur Herstellung von redispergierbaren hochreinen Nanospinellpulvern, redispergierbare hochreine Nanospinellpulver und daraus erzeugte dichtgesinterte transparente Spinellprodukte bekannt, bei dem Al- und/oder Mg-enthaltende Ausgangsstoffe gelöst werden, der Ansatz dann unter Rühren bei Temperaturen von 70-95 °C hydrolysiert wird, nachfolgend eine Trocknung der Materialien durchgeführt wird, dann die so erhaltenen Pulver bei Temperaturen von 900 - 1150 °C kalziniert werden und diese dann einer Dispergierungsmahlung unterworfen werden.

Aus der CN 101 265 082 A ist ein Verfahren zur Herstellung von transparenter Mg-Al-Spinell-Keramik bekannt, bei dem hochreines Mg und hochreines Al zu Spinellpulver verarbeitet wird und dies unter Hinzufügung von LiF-Pulver als Sinterhilfsmittel zu der Mg-Al-Spinell-Keramik.

Gemäß der US 3 567 472 A ist ein Bestandteil einer Entladungslampe bekannt, welches aus Spinell besteht und hergestellt wurde, indem zu Spinellpulver 0,1 - 1,5 Gew.-% CaO zugegeben und diese gemeinsam gesintert werden. Das hergestellte Bauteil soll lichtdurchlässig ("light-transmitting") sein.

Nach Bratton, R.J.: J. of the Am. Ceram. Soc. Bd. 57, Nr. 7, 1. Juli 1974, S. 283-286 ist weiter bekannt, dass ein transluzenter gesinterter Spinell hergestellt wird aus Mg- und Al-Pulver mit Kationen-Verunreinigungen (unter anderem mit 10 ppm Ca = 0,001 Ma.-%) und einer mittleren Partikelgröße von 700 Angström (=70 nm). Nach der Zugabe von geringen Mengen an CaO wird die Pulvermischung bei Temperaturen bis 1850 °C gesintert.

Obwohl somit die Literatur sinterfördernde Dotierungen für Spinell-Keramik aus fast allen Gruppen des Periodensystems beschreibt, ist bisher keine Systematik erkennbar, welche zudotierten Ionen auf welche Weise die Erzielung hoher Transparenz unter weitgehender Vermeidung sichtbarer Defekte befördern und dies bei möglichst niedriger Sintertemperatur zur Realisierung feinkörniger Gefüge mit hohen mechanischen Parametern ermöglichen. Auch fehlen in der Literatur für Magnesium-Aluminium-Spinell ähnlich umfassende Daten z.B. zur Menge an fester Löslichkeit einzelner Elemente des Periodensystems in Abhängigkeit von Temperatur und Atmosphären, wie dies für Al₂O₃ seit Jahrzehnten bekannt ist.

Angesichts der dargelegten beschränkten bisherigen Erfolge des Standes der Technik besteht eine Aufgabe der vorliegenden Erfindung in der Angabe transparenter Spinellkeramiken, die keine sichtbaren Defekte oder im Fall von Defekten mit Größen > 20 µm diese höchsten in geringer Häufigkeit < 300/cm³ enthalten, und die bei Probendicken ≥ 3 mm in Wellenlängenbereichen infraroten Lichtes, gemessen zwischen 1000 und 2500 nm, eine In-Line-Transmission von mehr als 82 % aufweisen.

Eine weitere Aufgabe der vorliegenden Erfindung besteht in der Angabe transparenter Spinellkeramiken, die keine sichtbaren Defekte oder im Fall von Defekten mit Größen > 20 µm diese höchsten in geringer Häufigkeit < 300/cm³ enthalten, und die bei Probendicken ≥ 3 mm in Wellenlängenbereichen sichtbaren Lichtes, gemessen zwischen 600 und 650nm, eine wahre ("real") In-Line-Transmission RIT > 80% aufweisen.

Und eine weitere Aufgabe der vorliegenden Erfindung besteht in der Angabe von Verfahren zur Herstellung solcher transparenten Spinellkeramiken bei möglichst niedrigen Sintertemperaturen.

Die Aufgaben werden durch die in den Ansprüchen angegebene Erfindung gelöst. Vorteilhafte Ausgestaltungen sind Gegenstand der Unteransprüche.

Die erfindungsgemäßen Spinellkeramiken, die in Wellenlängenbereichen infraroten Lichtes von 800 bis 6000 nm transparent sind, bestehen aus gesintertem Magnesium-Aluminium-Spinell mit einer mittleren Gefügekorngröße von ≤ 10 µm und mit insgesamt maximal 0,5 Ma.-% an homogen verteilten Zusätzen aus Calcium und/oder Strontium und/oder Barium, die in einer Konzentration, jeweils ausgedrückt als Oxid, von 0,005 bis < 0,2 Ma.-% CaO und/oder 0,005 bis < 0,5 Ma.-% SrO und/oder 0,005 bis < 0,5 Ma.-% BaO vorhanden sind, und die bei Dicken von ≥ 3 mm mindestens im Bereich infraroter Wellenlängen, gemessen zwischen 1000 und 2500 nm, eine In-Line-Transmission von > 82 % aufweisen.

Die erfindungsgemäßen Spinellkeramiken, die in Wellenlängenbereichen sichtbaren Lichtes von 350 bis 750 nm transparent sind, bestehen auch aus gesintertem Magnesium-Aluminium-Spinell mit einer mittleren Gefügekorngröße von ≤ 10 µm und mit insgesamt maximal 0,3 Ma.-% an homogen verteilten Zusätzen aus Calcium und/oder Strontium und/oder Barium, die in einer Konzentration, jeweils ausgedrückt als Oxid, von 0,005 bis < 0,2 Ma.-% CaO und/oder 0,005 bis < 0,3 Ma.-% SrO und/oder 0,005 bis < 0,25 Ma.-% BaO vorhanden sind, und die bei Dicken von ≥ 3 mm mindestens im Bereich sichtbarer Wellenlängen, gemessen zwischen 600 und 650 nm, eine RIT von > 80 % aufweisen.

Vorteilhafterweise ist die mittlere Gefügekorngröße des gesinterten Magnesium-Aluminium-Spinells < 5 µm, vorteilhafterweise < 2,5 µm, noch vorteilhafterweise < 1 µm.

Auch vorteilhafterweise sind für Spinellkeramiken, die in Wellenlängenbereichen infraroten Lichtes transparent sind, insgesamt maximal 0,3 Ma.-% an homogen verteilten Zusätzen vorhanden.

Ebenfalls vorteilhafterweise sind für Spinellkeramiken, die in Wellenlängenbereichen sichtbaren Lichtes transparent sind, insgesamt maximal 0,2 Ma.-% an homogen verteilten Zusätzen vorhanden.

Weiterhin vorteilhafterweise ist als Zusatz Calcium in einer Konzentration, ausgedrückt als CaO, von 0,01 bis 0,1 Ma.-% vorhanden.

Und auch vorteilhafterweise sind für Spinellkeramiken, die in Wellenlängenbereichen infraroten Lichtes transparent sind, als Zusätze Strontium und/oder Barium in einer Konzentration, ausgedrückt als SrO und/oder BaO, von 0,01 bis 0,4 Ma.-% an SrO und/oder 0,01 bis 0,4 Ma.-% an BaO vorhanden, wobei maximal 0,3 Ma.-% an Zusätzen an Strontium und/oder Barium vorhanden sind.

Ebenfalls vorteilhaft ist es, wenn für Spinellkeramiken, die in Wellenlängenbereichen sichtbaren Lichtes transparent sind, als Zusätze Strontium und/oder Barium in einer Konzentration, ausgedrückt als SrO und/oder BaO, von 0,01 bis 0,2 Ma.-% an SrO und/oder 0,01 bis 0,15 Ma.-% an BaO vorhanden sind, wobei maximal 0,2 Ma.-% an Zusätzen an Strontium und/oder Barium vorhanden sind.

Die erfindungsgemäßen Spinellkeramiken, die in Wellenlängenbereichen infraroten Lichtes transparent sind, zeigen bei Dicken von ≥ 3 mm mindestens im Bereich infraroter Wellenlängen, gemessen zwischen 1000 und 2500 nm, eine In-Line-Transmission von > 82%, vorteilhafterweise >84%, noch vorteilhaftererweise > 85%.

Die erfindungsgemäßen Spinellkeramiken, die in Wellenlängenbereichen sichtbaren Lichtes transparent sind, zeigen bei Dicken von ≥ 3 mm mindestens im Bereich sichtbarer Wellenlängen, gemessen zwischen 600 und 650 nm, eine RIT von > 80%, vorteilhafterweise > 82%, noch vorteilhaftererweise > 84%.

Ebenfalls von Vorteil ist es, wenn die erfindungsgemäßen Spinellkeramiken sichtbare Defekte größer 20 µm nur mit einer Häufigkeit < 300 /cm³, vorteilhafterweise mit einer Häufigkeit von 50 bis 150/cm³, enthalten.

Und auch von Vorteil ist es, wenn Vickers-Härten HV10 von ≥ 12,5 GPa vorliegen.

Bei dem erfindungsgemäßen Verfahren zur Herstellung transparenter Spinellkeramiken, die in Wellenlängenbereichen infraroten Lichtes transparent sind, wird die Zugabe von insgesamt maximal 0,5 Ma.-% an Zusätzen aus Calcium und/oder Strontium und/oder Barium in einer Konzentration, jeweils ausgedrückt als Oxid, von 0,005 bis < 0,2 Ma.-% CaO und/oder 0,005 bis < 0,5 Ma.-% SrO und/oder 0,005 bis < 0,5 Ma.-% BaO in Form ungelöster Ca-, Sr- und /oder Ba-haltiger Verbindungen und/oder in Wasser gelöster Ca-, Sr- und /oder Ba-haltiger Verbindungen und/oder in organischen Lösungsmitteln gelöster Ca-, Sr- und /oder Ba-haltiger Verbindungen zu Magnesium-Aluminium-Spinell-Pulver realisiert, die Zusätze werden homogen verteilt und anschließend die Materialien zu einer transparenten Spinellkeramik gesintert.

Bei dem erfindungsgemäßen Verfahren zur Herstellung transparenter Spinellkeramiken, die in Wellenlängenbereichen sichtbaren Lichtes transparent sind, wird die Zugabe von insgesamt maximal 0,3 Ma.-% an Zusätzen aus Calcium und/oder Strontium und/oder Barium in einer Konzentration, jeweils ausgedrückt als Oxid, von 0,005 bis < 0,2 Ma.-% CaO und/oder 0,005 bis < 0,3 Ma.-% SrO und/oder 0,005 bis < 0,25 Ma.-% BaO in Form ungelöster Ca-, Sr- und /oder Ba-haltiger Verbindungen und/oder in Wasser gelöster Ca-, Sr- und /oder Ba-haltiger Verbindungen und/oder in organischen Lösungsmitteln gelöster Ca-, Sr- und /oder Ba-haltiger Verbindungen zu Magnesium-Aluminium-Spinell-Pulver realisiert, die Zusätze werden homogen verteilt und anschließend die Materialien zu einer transparenten Spinellkeramik gesintert.

Vorteilhafterweise wird die Zugabe der Zusätze während der Schlicker- oder Versatzaufbereitung der Keramik, oder im Rahmen einer Imprägnierung oder Infiltration der Zusätze in offene Poren eines trockenen Keramikkörpers, oder durch lonenaustausch zwischen feuchten Magnesium-Aluminium-Spinellkörpern und erfindungsgemäßen Ca-, Sr- und/oder Ba-haltigen Lösungen realisiert.

Mit der erfindungsgemäßen Lösung wird es erstmals möglich, transparente Spinellkeramiken mit mittleren Korngrößen ≤ 10 µm anzugeben, die keine sichtbaren Defekte oder im Fall von Defekten mit Größen > 20 µm diese höchstens in geringer Häufigkeit < 300/cm³ enthalten, und die bei Probendicken ≥ 3 mm in Wellenlängenbereichen infraroten Lichtes, gemessen zwischen 1000 und 2500 nm, eine In-Line-Transmission von mehr als 82 % aufweisen.

Erreicht wird dies durch in Wellenlängenbereichen infraroten Lichtes transparente Spinellkeramiken, die aus gesintertem Magnesium-Aluminium-Spinell mit einer mittleren Gefügekorngröße von ≤ 10 µm und mit insgesamt maximal 0,5 Ma.-% an homogen verteilten Zusätzen aus Calcium und/oder Strontium und/oder Barium, die in einer Konzentration, jeweils ausgedrückt als Oxid, von 0,005 bis < 0,2 Ma.-% CaO und/oder 0,005 bis < 0,5 Ma.-% SrO und/oder 0,005 bis < 0,5 Ma.-% BaO bestehen.

Weiterhin wird es durch die erfindungsgemäße Lösung erstmals möglich, transparente Spinellkeramiken mit mittleren Korngrößen ≤ 10 µm anzugeben, die keine sichtbaren Defekte oder im Fall von Defekten mit Größen > 20 µm diese höchsten in geringer Häufigkeit < 300/cm³ enthalten, und die bei Probendicken ≥ 3 mm in Wellenlängenbereichen sichtbaren Lichtes, gemessen zwischen 600 und 650nm, eine wahre ("real") In-Line-Transmission RIT > 80% aufweisen.

Erreicht wird dies durch in Wellenlängenbereichen sichtbaren Lichtes transparente Spinellkeramiken, die aus gesintertem Magnesium-Aluminium-Spinell mit einer mittleren Gefügekorngröße von ≤ 10 µm und mit insgesamt maximal 0,3 Ma.-% an homogen verteilten Zusätzen aus Calcium und/oder Strontium und/oder Barium, die in einer Konzentration, jeweils ausgedrückt als Oxid, von 0,005 bis < 0,2 Ma.-% CaO und/oder 0,005 bis < 0,3 Ma.-% SrO und/oder 0,005 bis < 0,25 Ma.-% BaO bestehen.

Und ebenfalls wird es durch die erfindungsgemäße Lösung erstmals möglich, ein Verfahren zur Herstellung solcher transparenter Spinellkeramiken bei möglichst niedrigen Sintertemperaturen anzugeben.

Dies wiederum wird erreicht für in Wellenlängenbereichen infraroten Lichtes transparente Spinellkeramiken, indem insgesamt maximal 0,5 Ma.-% an Zusätzen aus Calcium und/oder Strontium und/oder Barium in einer Konzentration, jeweils ausgedrückt als Oxid, von 0,005 bis < 0,2 Ma.-% CaO und/oder 0,005 bis < 0,5 Ma.-% SrO und/oder 0,005 bis < 0,5 Ma.-% BaO in Form ungelöster Ca-, Sr- und /oder Ba-haltiger Verbindungen und/oder in Wasser gelöster Ca-, Sr- und /oder Ba-haltiger Verbindungen und/oder in organischen Lösungsmitteln gelöster Ca-, Sr- und /oder Ba-haltiger Verbindungen zu Magnesium-Aluminium-Spinell-Pulver zugegeben werden, die Zusätze homogen verteilt und anschließend die Materialien zu einer transparenten Spinellkeramik gesintert werden.

Für in Wellenlängenbereichen sichtbaren Lichtes transparente Spinellkeramiken wird die Herstellung solcher transparenter Spinellkeramiken bei möglichst niedrigen Sintertemperaturen erreicht, indem insgesamt maximal 0,3 Ma.-% an Zusätzen aus Calcium und/oder Strontium und/oder Barium in einer Konzentration, jeweils ausgedrückt als Oxid, von 0,005 bis < 0,2 Ma.-% CaO und/oder 0,005 bis < 0,3 Ma.-% SrO und/oder 0,005 bis < 0,25 Ma.-% BaO in Form ungelöster Ca-, Sr- und /oder Ba-haltiger Verbindungen und/oder in Wasser gelöster Ca-, Sr- und /oder Ba-haltiger Verbindungen und/oder in organischen Lösungsmitteln gelöster Ca-, Sr- und /oder Ba-haltiger Verbindungen zu Magnesium-Aluminium-Spinell-Pulver zugegeben werden, die Zusätze homogen verteilt werden und anschließend die Materialien zu einer transparenten Spinellkeramik gesintert werden.

Bei den Zusätzen liegen unterschiedliche Obergrenzen der einzusetzenden Konzentrationen vor, die durch die unterschiedlichen Atomgewichte bedingt sind, so dass ähnliche molare Konzentrationen bereits mit geringerer Massenzugabe von z.B. Ba als im Falle von Sr oder Ca erzielt werden.

Etwas unterschiedliche Obergrenzen der einzusetzenden Zusätze sind auch dann zu beachten, wenn die Spinellkeramiken nur für den Infrarot-Einsatz gedacht sind oder darüber hinaus auch eine hohe Transparenz im Bereich sichtbaren Lichtes aufweisen sollen.

Unter Magnesium-Aluminium-Spinell, im Rahmen dieser Erfindung als Spinellkeramik bezeichnet, soll weiterhin im Rahmen dieser Erfindung jegliche Zusammensetzung der Art MgO·xAl₂O₃ verstanden werden, mit x-Werten, die im Homogenitätsbereich der bekannten Phasendiagramme liegen. Darüber hinaus enthalten die erfindungsgemäß gesinterten Spinellkeramiken Zusätze und/oder Dotierungen und können auch geringe Ausscheidungen von nicht im Spinellgitter gelöstem MgO- oder Al₂O₃-Anteilen oder von im Spinell-Gitter gelösten oder nicht gelösten Verunreinigungen enthalten, solange deren Gehalt so gering ist, dass die dadurch verursachte Lichtstreuung oder Absorption die erfindungsgemäß zu erreichende Transparenz nicht verhindert.

Unter Sintern soll im Rahmen dieser Erfindung jede von Diffusionsprozessen bestimmte Verdichtung pulvertechnisch erzeugter Körper ohne oder mit Anwendung von Druck und ohne Einschränkung auf bestimmte Atmosphären oder Vakuum verstanden werden.

Unter infrarotem Wellenlängenbereich soll erfindungsgemäß ein Wellenlängenbereich im unteren bis mittleren infraroten Wellenlängenbereich, wie zwischen ca. 800 bis 6000 nm, verstanden werden.

Unter sichtbarem Wellenlängenbereich soll erfindungsgemäß ein Wellenlängenbereich von ca. 350 bis 750 nm verstanden werden.

Grundsätzlich können mehrere der erfindungsgemäßen Zusätze von Calcium, Strontium und Barium auch gemeinsam in den Spinellkeramiken enthalten sein. Um aber transmissionsmindernde Fremdphasenausscheidungen und die Bildung sichtbarer Defekte im Volumen der erfindungsgemäßen in Wellenlängenbereichen infraroten Lichtes transparenten Spinellkeramiken möglichst zu vermeiden oder auf ein Minimum zu beschränken, ist eine Obergrenze der Summe aller Zusätze von insgesamt 0,5 Ma.-%, vorteilhafterweise von 0,3 Ma.-%, zu beachten. Um transmissionsmindernde Fremdphasenausscheidungen und die Bildung sichtbarer Defekte auch im Volumen der erfindungsgemäßen in Wellenlängenbereichen sichtbaren Lichtes transparenten Spinellkeramiken möglichst zu vermeiden oder auf ein Minimum zu beschränken, ist eine Obergrenze der Summe aller Zusätze von insgesamt 0,3 Ma.-%, vorteilhafterweise von 0,2 Ma.-%, zu beachten.

Aus physikalischen Gründen erfüllen die in Wellenlängenbereichen des sichtbaren Lichtes erfindungsgemäß transparenten Spinellkeramiken auch die Transparenzkriterien der in Wellenlängenbereichen infraroten Lichtes erfindungsgemäß transparenten Spinellkeramiken. Hingegen können die in Wellenlängenbereichen infraroten Lichtes transparenten Spinellkeramiken die Transparenzkriterien der in Wellenlängenbereichen des sichtbaren Lichtes transparenten Spinellkeramiken nur erfüllen, sofern die Kriterien der Anteile an Zusätzen für die in Wellenlängenbereichen des sichtbaren Lichtes transparenten Spinellkeramiken erfüllt werden.

Im Sinne der Vermeidung oder Minimierung eventueller Flüssigphasenbildungen enthalten die erfindungsgemäßen Spinellkeramiken vorteilhafterweise keine weiteren Zusätze oder Dotierungen von Elementen außerhalb der Gruppe der Erdalkali-Elemente. Naturgemäß sind rohstoff- und verarbeitungsbedingte Verunreinigungen im Umfang von bis zu ca. 0,1 Ma.-% oft nicht zu vermeiden und können in den erfindungsgemäßen Spinellkeramiken enthalten sein.

Wurden z.B. solcherart dotierte Formkörper aus Spinellpulvern mit ca. 30 m²/g spezifischer Oberfläche hergestellt, so wird mittels erfindungsgemäßer Zusätze auf Basis von Sr- oder Ba-Verbindungen bei unveränderter Verarbeitung des Pulvers, druckloser Sinterung bis auf relative Dichten um 96-98 % der theoretischen Dichte mit geschlossener Porosität und anschließender heißisostatischer Endverdichtung (HIP) die Sintertemperatur nur unwesentlich gegenüber einer Spinellkeramik nach dem Stand der Technik verändert, für eine mit ≤ 0,2 Ma.-% CaO dotierte erfindungsgemäße Spinellkeramik hingegen um ca. 50 - 100 °C erniedrigt. Obwohl mit einem Sr-oder Ba-haltigen Zusatz der erfindungsgemäßen Spinellkeramik die notwendige Sintertemperatur gegebenenfalls sogar geringfügig erhöht ist (ca. 1525 °C gegenüber 1510 °C bei undotierter Spinellkeramik), liegen auch bei diesen Zusätzen mindestens zwei überraschende Effekte vor: Die mittleren Gefügekorngrößen aller erfindungsgemäß dotierten Spinellkeramiken (ermittelt als das 1,56-fache der mittleren Sehnenlänge üblicher Linienschnittauswertung) sind typischerweise < 10 µm, vorzugsweise zwischen 0,3 und 1,0 µm, oft im engeren Bereich von 0,4 bis 0,7 µm. Zusammen mit der nahezu vollständigen Verdichtung der transparenten Spinellkeramik führen diese feinkristallinen Gefüge zu hohen Härten, die z.B. gemessen als Vickers-Härte HV10 (bei 10 kg oder 98 N Prüflast des Indenters) zwischen 12,5 und 15 GPa, oft um 14 bis 14,5 GPa, liegen. Ähnliche mittlere Gefügekorngrößen und Härten sind zwar auch mittels der seit Bratton 1974 bekannten höheren Ca-Dotierung zu erzielen, dann aber begleitet von den o.a. niedrigeren RIT-Werten und einer weißlichen, durch Lichtstreuung verursachten Trübung dickerer Komponenten (bei z.B. 4 mm Dicke ist die nach DIN5036-1 bestimmte Trübung solcher Keramik i.a. > 3 %). Die erfindungsgemäßen Dotierungen vermeiden diesen Nachteil und verbinden bei einer Dicke polierter Proben > 3 mm für Wellenlängen im Bereich zwischen 600 und 650 nm eine wahre In-Line-Transmission RIT > 80 % mit einem besonders geringen Gehalt sichtbarer Defekte > 20 µm von < 300/cm³. Überwiegend handelt es sich dabei um kleinere unvollständig versinterte Gefügebereiche. Je nach Art und Höhe der Dotierung liegt deren Häufigkeit oft im Bereich von 50 - 150/cm³, in jedem Fall aber unterhalb von 300/cm³, gegenüber einer deutlich höheren Häufigkeit in undotierter Spinellkeramik nach dem Stand der Technik aus gleichem Rohstoff bei analoger Verarbeitung.

Höhere als die erfindungsgemäßen Konzentrationen an Zusätzen sind zu vermeiden, da sie zu lichtstreuenden Ausscheidungen von Fremdphasen im Spinellgefüge führen, die dann die In-Line-Transmission verringern und unter Umständen auch sichtbare Defekte bilden. Andererseits sind Konzentrationen an Zusätzen oberhalb der erfindungsgemäßen Untergrenze erforderlich für eine signifikante Wirkung der Zusätze.

Die erfindungsgemäßen Zusätze können dem Spinellpulver sowohl als Oxide CaO, SrO und/oder BaO zugegeben werden, als auch in Form anderer Ca-, Sr- und/oder Ba-haltiger Verbindungen, also auch als Carbonate, Nitrate oder anderes. Wichtig ist dabei in jedem Fall einerseits die Einhaltung der erfindungsgemäßen als Oxid ausgedrückten Konzentrationen, wie auch eine gute räumliche Homogenisierung der Zusätze mit dem Spinellpulver. Diese Homogenisierung kann z.B. durch eine gemeinsame besonders sorgfältige Dispergierungsmahlung des Spinellpulvers mit dem Zusatz in einer Kugelmühle erfolgen, wie seit Jahrzehnten u.a. für die Homogenisierung von MgO-Dotierungen in Al₂O₃-Keramiken bekannt. Dieser Homogenisierungsschritt sichert einerseits die gleichmäßige Präsenz und sinterfördernde Wirkung der Dotierung auf mikroskopischer Ebene überall im Sinterkörper und verhindert andererseits die Bildung lichtstreuender Fremdphasenausscheidungen, wie sie durch lokale Agglomeration der Zusätze entstehen könnten.

Der besondere Vorteil der erfindungsgemäßen Lösung gegenüber dem Stand der Technik besteht darin, dass konkrete Angaben von Zusätzen hinsichtlich Art und Menge und insbesondere hinsichtlich der Gesamtmenge im Zusammenhang mit einer Obergrenze für die mittlere Gefügekorngröße gemacht werden, die ausschließlich zu Magnesium-Aluminium-Spinell-Pulvern zugegeben werden und entsprechend der erfindungsgemäßen Herstellung zu Spinellkeramiken führen, die sehr spezielle und sehr hohe Transmissionswerte in unterschiedlichen Wellenlängenbereichen sowie keine sichtbaren Defekte oder nur mit einer geringen Häufigkeit aufweisen.

Nachfolgend wird die Erfindung an mehreren Ausführungsbeispielen näher erläutert.

### Beispiel 1

Einer MgAl₂O₄-Suspension aus 29,8 Ma.-% Spinellpulver (S30CR, Fa. Baikowski), 69,6 Ma.-% deionisiertem Wasser und darin gelöstem 0,6 Ma.-% Dispergierhilfsmittel Dolapix CE64 (Fa. Zschimmer & Schwarz) wurde nach 2-stündiger Deagglomerationsmahlung im Labor-Attritor 0,1 Ma.-% CaO-Pulver (Fa. Merck) zugegeben.

Nach Zusatz von 0,6 Ma.-% Polyvinylalkohol (Mowiol 4-88, Fa. Zschimmer & Schwarz) und 2,0 Ma.-% Glycerin, bezogen auf die Masse an Spinellpulver, sowie intensiver Homogenisierung mittels Rührwerk erfolgte die Trocknung der Suspension.

Das getrocknete und siebgranulierte Versatzpulver wurde zum Zweck der Formgebung zu Kreisscheiben mit 30 mm Durchmesser und 9 mm Dicke vorgepresst und anschließend kaltisostatisch nachverdichtet (CiP). Nach 2-stündiger thermischer Entbinderung an Luft bei 800°C wurden die Formkörper bei 1450°C 2 h an Luft gesintert und zur Erzielung der Transparenz nachfolgend bei 1420°C 15 h heißisostatisch (HiP) in Argon-Atmosphäre nachgepresst. Die Festlegung der Temperaturen erfolgte im Ergebnis einer separaten Optimierung der Wärmebehandlungsprozesse speziell für dieses Versatzpulver. Für anders dotierte Versätze sind andere Temperaturen erforderlich.

Die Dichte der entstandenen transparenten Scheiben lag bei > 99,9 % der theoretischen Dichte. Die mittlere Gefügekorngröße (ermittelt als das 1,56fache der gemessenen mittleren Sehnenlängen) betrug 0,68 µm.

Die an keramografisch präparierten Anschliffen gemessene Vickers-Makrohärte HV10 betrug HV10 = 14,0 GPa.

Die Scheiben wurden planparallel auf Dicken von 3 und 5 mm geschliffen und beidseitig bis zu einer Oberflächenrauhigkeit R_{z} < 0,03 µm poliert.

Die an diesen Scheiben bei 640 nm Wellenlänge gemessene wahre In-Line-Transmission (RIT; Spektrophotometer Gigahertz LCRT-2005-S) betrug 84,7 % für 3 mm dicke Scheiben und 84,5 % für 5 mm dicke Scheiben.

Die an diesen Scheiben mittels eines Spektrometers vom Typ Spectrum 400 (Perkin-Elmer, Waltham, MA, USA) bei 2000 nm Wellenlänge gemessene In-Line-Transmission betrug 89 % für 5 mm dicke Scheiben und erreicht damit im Rahmen der Messgenauigkeit die für diese Wellenlänge zu erwartende theoretische Transmission.

Zur Charakterisierung der sichtbaren Defektpopulation oberhalb einer Größe von 20 µm wurde ein 12 mm x 12 mm großer Probenausschnitt mit einem hochauflösenden Scanner aufgenommen. An einer ca. 20fach vergrößerten grafischen Abbildung dieses Ausschnittes wurden die sichtbaren Defekte ausgezählt. Hierbei wurde eine Defektkonzentration von 246/cm³ ermittelt.

### Beispiel 2

Einer MgAl₂O₄-Suspension aus 29,8 Ma.-% Spinellpulver (S30CR, Fa. Baikowski), 69,6 Ma.-% deionisiertem Wasser und darin gelöstem 0,6 Ma.-% Dispergierhilfsmittel Dolapix CE64 (Fa. Zschimmer & Schwarz) wurde nach 2-stündiger Deagglomerationsmahlung im Labor-Attritor 50 ml einer wässrigen Strontiumnitratlösung zugegeben. Die Konzentration dieser Dotierungslösung wurde so gewählt, dass der auf die Masse des Spinellpulvers bezogene Gehalt an Strontiumoxid SrO 0,125 Ma.-% betrug.

Nach Zusatz von 0,6 Ma.-% Polyvinylalkohol (Mowiol 4-88, Fa. Zschimmer & Schwarz) und 2,0 Ma.-% Glycerin, bezogen auf die Masse an Spinellpulver, sowie intensiver Homogenisierung mittels Rührwerk erfolgte die Trocknung der Suspension.

Das getrocknete und siebgranulierte Versatzpulver wurde zum Zweck der Formgebung zu Kreisscheiben mit 30 mm Durchmesser und 9 mm Dicke vorgepresst und anschließend kaltisostatisch nachverdichtet (CiP). Nach 2-stündiger thermischer Entbinderung an Luft bei 800°C wurde der Formkörper bei 1525°C 2 h an Luft gesintert und zur Erzielung der Transparenz nachfolgend bei 1530°C 15 h heißisostatisch (HiP) in Argon-Atmosphäre nachgepresst.

Die Dichte der entstandenen transparenten Scheibe lag bei > 99,9 % der theoretischen Dichte. Die mittlere Gefügekorngröße (ermittelt als das 1,56fache der gemessenen mittleren Sehnenlängen) betrug 0,61 µm.

Die an keramografisch präparierten Anschliffen gemessene Vickers-Makrohärte HV10 betrug HV10 = 14,0 GPa.

Die Scheibe wurde planparallel auf eine Dicke von 4 mm geschliffen und beidseitig bis zu einer Oberflächenrauhigkeit R_{z} < 0,03 µm poliert. Die an dieser Scheibe bei 640 nm Wellenlänge gemessene wahre In-Line-Transmission (RIT) betrug 85,3 %. Die Messung erfolgte mit dem Spektrophotometer Gigahertz LCRT-2005-S.

Mittels Spektrometer Varian Cary 4000 (Varian Inc. Mulgrave, Vic. Australia) wurde bei 640 nm Wellenlänge der Wert der totalen Vorwärts-Transmission mit TFT = 86,4 % gemessen. Der nach ASTM D 1003-00 aus den jeweiligen Total- und In-Line-Transmissionsdaten bestimmte Wert für die Trübung (Differenz aus TFT und RIT, geteilt durch TFT, multipliziert mit 100) betrug 1,3 %.

Die im Infraroten Wellenlängenbereich bei 2000 nm mittels eines Spektrometers vom Typ Spectrum 400 (Perkin-Elmer, Waltham, MA, USA) gemessene In-Line-Transmission derselben Scheibe betrug 86.3%.

Zur Charakterisierung der sichtbaren Defektpopulation oberhalb einer Größe von 20 µm wurde ein 12 mm x 12 mm großer Probenausschnitt mit einem hochauflösenden Scanner aufgenommen. An einer ca. 20fach vergrößerten grafischen Abbildung dieses Ausschnittes wurden die sichtbaren Defekte ausgezählt. Hierbei wurde eine Defektkonzentration von 111/cm³ ermittelt.

### Beispiel 3

Einer MgAl₂O₄-Suspension aus 29,8 Ma.-% Spinellpulver (S30CR, Fa. Baikowski), 69,6 Ma.-% deionisiertem Wasser und darin gelöstem 0,6 Ma.-% Dispergierhilfsmittel Dolapix CE64 (Fa. Zschimmer & Schwarz) wurde nach 2-stündiger Deagglomerationsmahlung im Labor-Attritor 50 ml einer wässrigen Strontiumnitratlösung zugegeben. Die Konzentration dieser Dotierungslösung wurde so gewählt, dass der auf die Masse des Spinellpulvers bezogene Gehalt an Strontiumoxid SrO 0,3125 Ma.-% betrug.

Nach Zusatz von 0,6 Ma.-% Polyvinylalkohol (Mowiol 4-88, Fa. Zschimmer & Schwarz) und 2,0 Ma.-% Glycerin, bezogen auf die Masse an Spinellpulver, sowie intensiver Homogenisierung mittels Rührwerk erfolgte die Trocknung der Suspension.

Das getrocknete und siebgranulierte Versatzpulver wurde zum Zweck der Formgebung zu Kreisscheiben mit 30 mm Durchmesser und 9 mm Dicke vorgepresst und anschließend kaltisostatisch nachverdichtet (CiP). Nach 2-stündiger thermischer Entbinderung an Luft bei 800°C wurde der Formkörper bei 1470°C 2 h an Luft gesintert und zur Erzielung der Transparenz nachfolgend bei 1470°C 15 h heißisostatisch (HiP) in Argon-Atmosphäre nachgepresst.

Die Dichte der entstandenen transparenten Scheiben lag bei > 99,9 % der theoretischen Dichte. Die mittlere Gefügekorngröße (ermittelt als das 1,56fache der gemessenen mittleren Sehnenlängen) betrug 0,36 µm.

Die an keramografisch präparierten Anschliffen gemessene Vickers-Makrohärte HV10 betrug HV10 = 14,3 GPa.

Die Scheiben wurden planparallel auf Dicken von 4 mm geschliffen und beidseitig bis zu einer Oberflächenrauhigkeit R_{z} < 0,03 µm poliert. Die an dieser Scheibe bei 2000 nm Wellenlänge mittels eines Spektrometers vom Typ Spectrum 400 (Perkin-Elmer, Waltham, MA, USA) gemessene wahre Line-Transmission betrug 86,6 %.

Zur Charakterisierung der sichtbaren Defektpopulation oberhalb einer Größe von 20 µm wurde ein 12 mm x 12 mm großer Probenausschnitt mit einem hochauflösenden Scanner aufgenommen. An einer ca. 20fach vergrößerten grafischen Abbildung dieses Ausschnittes wurden die sichtbaren Defekte ausgezählt. Hierbei wurde eine Defektkonzentration von 85/cm³ ermittelt.

### Beispiel 4

Einer MgAl₂O₄-Suspension aus 29,8 Ma.-% Spinellpulver (S30CR, Fa. Baikowski), 69,6 Ma.-% deionisiertem Wasser und darin gelöstem 0,6 Ma.-% Dispergierhilfsmittel Dolapix CE64 (Fa. Zschimmer & Schwarz) wurde nach 2-stündiger Deagglomerationsmahlung im Labor-Attritor 50 ml einer wässrigen Bariumnitratlösung zugegeben. Die Konzentration dieser Dotierungslösung wurde so gewählt, dass der auf die Masse des Spinellpulvers bezogene Gehalt an Bariumoxid BaO 0,125 Ma.-% betrug.

Nach Zusatz von 0,6 Ma.-% Polyvinylalkohol (Mowiol 4-88, Fa. Zschimmer & Schwarz) und 2,0 Ma.-% Glycerin, bezogen auf die Masse an Spinellpulver, sowie intensiver Homogenisierung mittels Rührwerk erfolgte die Trocknung der Suspension.

Das getrocknete und siebgranulierte Versatzpulver wurde zum Zweck der Formgebung zu Kreisscheiben mit 30 mm Durchmesser und 9 mm Dicke vorgepresst und anschließend kaltisostatisch nachverdichtet (CiP). Nach 2-stündiger thermischer Entbinderung an Luft bei 800°C wurde der Formkörper bei 1520°C 2 h an Luft gesintert und zur Erzielung der Transparenz nachfolgend bei 1520°C 15 h heißisostatisch (HiP) in Argon-Atmosphäre nachgepresst.

Die Dichte der entstandenen transparenten Scheiben lag bei > 99,9 % der theoretischen Dichte. Die mittlere Gefügekorngröße (ermittelt als das 1,56fache der gemessenen mittleren Sehnenlängen) betrug 0,59 µm.

Die an keramografisch präparierten Anschliffen gemessene Vickers-Makrohärte HV10 betrug HV10 = 14,1 GPa.

Die Scheiben wurden planparallel auf Dicken von 4 mm geschliffen und beidseitig bis zu einer Oberflächenrauhigkeit R_{z} < 0,03 µm poliert. Die an diesen Scheiben bei 640 nm Wellenlänge gemessene wahre In-Line-Transmission (RIT) betrug 84,5 %. Die Messung erfolgte jeweils mit dem Spektrophotometer Gigahertz LCRT-2005-S. Mittels Spektrometer Varian Cary 4000 (Varian Inc. Mulgrave, Vic., Australia) wurde bei 640 nm Wellenlänge der Wert der totalen Vorwärts-Transmission TFT = 85,5 % gemessen. Der nach ASTM D 1003-00 aus den jeweiligen Total- und In-Line-Transmissionsdaten bestimmte Wert für die Trübung (Differenz aus TFT und RIT, geteilt durch TFT, multipliziert mit 100) betrug 1,5 %.

Die im Infraroten Wellenlängenbereich bei 2000 nm mittels eines Spektrometers vom Typ Spectrum 400 (Perkin-Elmer, Waltham, MA, USA) gemessene In-Line-Transmission derselben Scheibe betrug 86,8.

Zur Charakterisierung der sichtbaren Defektpopulation oberhalb einer Größe von 20 µm wurde ein 12 mm x 12 mm großer Probenausschnitt mit einem hochauflösenden Scanner aufgenommen. An einer ca. 20fach vergrößerten grafischen Abbildung dieses Ausschnittes wurden die sichtbaren Defekte ausgezählt. Hierbei wurde eine Defektkonzentration von 116/cm³ ermittelt.

### Beispiel 5

Einer MgAl₂O₄-Suspension aus 29,8 Ma.-% Spinellpulver (S30CR, Fa. Baikowski), 69,6 Ma.-% deionisiertem Wasser und darin gelöstem 0,6 Ma.-% Dispergierhilfsmittel Dolapix CE64 (Fa. Zschimmer & Schwarz) wurde nach 2-stündiger Deagglomerationsmahlung im Labor-Attritor 50 ml einer wässrigen Bariumnitratlösung zugegeben. Die Konzentration dieser Dotierungslösung wurde so gewählt, dass der auf die Masse des Spinellpulvers bezogene Gehalt an Bariumoxid BaO 0,3125 Ma.-% betrug.

Nach Zusatz von 0,6 Ma.-% Polyvinylalkohol (Mowiol 4-88, Fa. Zschimmer & Schwarz) und 2,0 Ma.-% Glycerin, bezogen auf die Masse an Spinellpulver, sowie intensiver Homogenisierung mittels Rührwerk erfolgte die Trocknung der Suspension.

Das getrocknete und siebgranulierte Versatzpulver wurde zum Zweck der Formgebung zu Kreisscheiben mit 30 mm Durchmesser und 9 mm Dicke vorgepresst und anschließend kaltisostatisch nachverdichtet (CiP). Nach 2-stündiger thermischer Entbinderung an Luft bei 800°C wurde der Formkörper bei 1490°C 2 h an Luft gesintert und zur Erzielung der Transparenz nachfolgend bei 1490°C 15 h heißisostatisch (HiP) in Argon-Atmosphäre nachgepresst.

Die Dichte der entstandenen transparenten Scheiben lag bei > 99,9 % der theoretischen Dichte. Die mittlere Gefügekorngröße (ermittelt als das 1,56fache der gemessenen mittleren Sehnenlängen) betrug 0,38 µm.

Die an keramografisch präparierten Anschliffen gemessene Vickers-Makrohärte HV10 betrug HV10 = 14,3 GPa.

Die Scheiben wurden planparallel auf Dicken von 4 mm geschliffen und beidseitig bis zu einer Oberflächenrauhigkeit R_{z} < 0,03 µm poliert. Die an dieser Scheibe bei 2000 nm Wellenlänge mittels eines Spektrometers vom Typ Spectrum 400 (Perkin-Elmer, Waltham, MA, USA) gemessene wahre Line-Transmission betrug 86,7%.

Zur Charakterisierung der sichtbaren Defektpopulation oberhalb einer Größe von 20 µm wurde ein 12 mm x 12 mm großer Probenausschnitt mit einem hochauflösenden Scanner aufgenommen. An einer ca. 20fach vergrößerten grafischen Abbildung dieses Ausschnittes wurden die sichtbaren Defekte ausgezählt. Hierbei wurde eine Defektkonzentration von 61/cm³ ermittelt.

## Patentansprüche

1. Spinellkeramiken, die in Wellenlängenbereichen infraroten Lichtes von 800 bis 6000 nm transparent sind, bestehend aus gesintertem Magnesium-Aluminium-Spinell mit einer mittleren Gefügekorngröße von ≤ 10 µm und mit insgesamt maximal 0,5 Ma.-% an homogen verteilten Zusätzen aus Calcium und/oder Strontium und/oder Barium, die in einer Konzentration, jeweils ausgedrückt als Oxid, von 0,005 bis < 0,2 Ma.-% CaO und/oder 0,005 bis < 0,5 Ma.-% SrO und/oder 0,005 bis < 0,5 Ma.-% BaO vorhanden sind, und die bei Dicken von ≥ 3 mm mindestens im Bereich infraroter Wellenlängen, gemessen zwischen 1000 und 2500 nm, eine In-Line-Transmission von > 82 % aufweisen.

2. Spinellkeramiken, die in Wellenlängenbereichen sichtbaren Lichtes von 350 bis 750 nm transparent sind, bestehend aus gesintertem Magnesium-Aluminium-Spinell mit einer mittleren Gefügekorngröße von ≤ 10 µm und mit insgesamt maximal 0,3 Ma.-% an homogen verteilten Zusätzen aus Calcium und/oder Strontium und/oder Barium, die in einer Konzentration, jeweils ausgedrückt als Oxid, von 0,005 bis < 0,2 Ma.-% CaO und/oder 0,005 bis < 0,3 Ma.-% SrO und/oder 0,005 bis < 0,25 Ma.-% BaO vorhanden sind, und die bei Dicken von ≥ 3 mm mindestens im Bereich sichtbarer Wellenlängen, gemessen zwischen 600 und 650 nm, eine RIT von > 80 % aufweisen.

3. Transparente Spinellkeramiken nach Anspruch 1 oder 2, bei denen die mittlere Gefügekorngröße des gesinterten Magnesium-Aluminium-Spinells < 5 µm, vorteilhafterweise < 2,5 µm, noch vorteilhaftererweise < 1 µm ist.

4. Transparente Spinellkeramiken nach Anspruch 1, bei denen insgesamt maximal 0,3 Ma.-% an homogen verteilten Zusätzen vorhanden sind.

5. Transparente Spinellkeramiken nach Anspruch 2, bei denen insgesamt maximal 0,2 Ma.-% an homogen verteilten Zusätzen vorhanden sind.

6. Transparente Spinellkeramiken nach Anspruch 1 oder 2, bei denen als Zusatz Calcium in einer Konzentration, ausgedrückt als CaO, von 0,01 bis 0,1 Ma.-% vorhanden ist.

7. Transparente Spinellkeramiken nach Anspruch 1, bei denen als Zusätze Strontium und/oder Barium in einer Konzentration, ausgedrückt als SrO und/oder BaO, von 0,01 bis 0,4 Ma.-% an SrO und/oder 0,01 bis 0,4 Ma.-% an BaO vorhanden sind, wobei maximal 0,3 Ma.-% an Zusätzen an Strontium und/oder Barium vorhanden sind.

8. Transparente Spinellkeramiken nach Anspruch 2, bei denen als Zusätze Strontium und/oder Barium in einer Konzentration, ausgedrückt als SrO und/oder BaO, von 0,01 bis 0,2 Ma.-% an SrO und/oder 0,01 bis 0,15 Ma.-% an BaO vorhanden sind, wobei maximal 0,2 Ma.-% an Zusätzen an Strontium und/oder Barium vorhanden sind.

9. Transparente Spinellkeramiken nach Anspruch 1, die bei Dicken von ≥ 3 mm mindestens im Bereich infraroter Wellenlängen, gemessen zwischen 1000 und 2500 nm, eine In-Line-Transmission von > 84 %, vorteilhafterweise > 85 % zeigen.

10. Transparente Spinellkeramiken nach Anspruch 2, die bei Dicken von ≥ 3 mm mindestens im Bereich sichtbarer Wellenlängen, gemessen zwischen 600 und 650 nm, eine RIT von > 82 %, vorteilhafterweise > 84 % zeigen.

11. Transparente Spinellkeramiken nach Anspruch 1 oder 2, die sichtbare Defekte größer 20 µm mit einer Häufigkeit < 300 /cm³ enthalten.

12. Transparente Spinellkeramiken nach Anspruch 11, die sichtbare Defekte größer 20 µm mit einer Häufigkeit von 50 bis 150/cm³ enthalten

13. Transparente Spinellkeramiken nach Anspruch 1 oder 2, bei denen Vickers-Härten HV10 von ≥ 12,5 GPa vorliegen.

14. Verfahren zur Herstellung transparenter Spinellkeramiken nach Anspruch 1, bei dem die Zugabe von insgesamt maximal 0,5 Ma.-% an Zusätzen aus Calcium und/oder Strontium und/oder Barium in einer Konzentration, jeweils ausgedrückt als Oxid, von 0,005 bis < 0,2 Ma.-% CaO und/oder 0,005 bis < 0,5 Ma.-% SrO und/oder 0,005 bis < 0,5 Ma.-% BaO in Form ungelöster Ca-, Sr- und /oder Ba-haltiger Verbindungen und/oder in Wasser gelöster Ca-, Sr- und /oder Ba-haltiger Verbindungen und/oder in organischen Lösungsmitteln gelöster Ca-, Sr- und /oder Ba-haltiger Verbindungen zu Magnesium-Aluminium-Spinell-Pulver realisiert wird, die Zusätze homogen verteilt werden und anschließend die Materialien zu einer transparenten Spinellkeramik gesintert werden.

15. Verfahren zur Herstellung transparenter Spinellkeramiken nach Anspruch 2, bei dem die Zugabe von insgesamt maximal 0,3 Ma.-% an Zusätzen aus Calcium und/oder Strontium und/oder Barium in einer Konzentration, jeweils ausgedrückt als Oxid, von 0,005 bis < 0,2 Ma.-% CaO und/oder 0,005 bis < 0,3 Ma.-% SrO und/oder 0,005 bis < 0,25 Ma.-% BaO in Form ungelöster Ca-, Sr- und /oder Ba-haltiger Verbindungen und/oder in Wasser gelöster Ca-, Sr- und /oder Ba-haltiger Verbindungen und/oder in organischen Lösungsmitteln gelöster Ca-, Sr- und /oder Ba-haltiger Verbindungen zu Magnesium-Aluminium-Spinell-Pulver realisiert wird, die Zusätze homogen verteilt werden und anschließend die Materialien zu einer transparenten Spinellkeramik gesintert werden.

16. Verfahren nach Anspruch 14 oder 15, bei dem die Zugabe der Zusätze während der Schlicker- oder Versatzaufbereitung der Keramik, oder im Rahmen einer Imprägnierung oder Infiltration der Zusätze in offene Poren eines trockenen Keramikkörpers, oder durch lonenaustausch zwischen feuchten Magnesium-Aluminium-Spinellkörpern und erfindungsgemäßen Ca-, Sr- und/oder Ba-haltigen Lösungen realisiert wird.

## Claims

1. Spinel ceramics which are transparent in infrared light wavelength ranges of 800 to 6000 nm, consisting of sintered magnesium aluminium spinel with a mean microstructure grain size of ≤ 10 µm and with in total not more than 0.5 mass% of homogeneously distributed additions of calcium and/or strontium and/or barium which are present in a concentration, expressed in each case as oxide, of 0.005 to < 0.2 mass% CaO and/or 0.005 to < 0.5 mass% SrO and/or 0.005 to < 0.5 mass% BaO, and which at thicknesses of ≥ 3 mm, at least in the range of infrared wavelengths, measured between 1000 and 2500 nm, have an in-line transmission of > 82%.

2. Spinel ceramics which are transparent in visible light wavelength ranges of 350 to 750 nm, consisting of sintered magnesium aluminium spinel with a mean microstructure grain size of ≤ 10 µm and with in total not more than 0.3 mass% of homogeneously distributed additions of calcium and/or strontium and/or barium which are present in a concentration, expressed in each case as oxide, of 0.005 to < 0.2 mass% CaO and/or 0.005 to < 0.3 mass% SrO and/or 0.005 to < 0.25 mass% BaO, and which at thicknesses of ≥ 3 mm, at least in the range of visible wavelengths, measured between 600 and 650 nm, have an RIT of > 80%.

3. Transparent spinel ceramics according to Claim 1 or 2, wherein the mean microstructure grain size of the sintered magnesium aluminium spinel is < 5 µm, advantageously < 2.5 µm, more advantageously < 1 µm.

4. Transparent spinel ceramics according to Claim 1, wherein in total not more than 0.3 mass% of homogenously distributed additions are present.

5. Transparent spinel ceramics according to Claim 2, wherein in total not more than 0.2 mass% of homogenously distributed additions are present.

6. Transparent spinel ceramics according to Claim 1 or 2, wherein calcium as an addition is present in a concentration, expressed as CaO, of 0.01 to 0.1 mass%.

7. Transparent spinel ceramics according to Claim 1, wherein strontium and/or barium as additions are present in a concentration, expressed as SrO and/or BaO, of 0.01 to 0.4 mass% of SrO and/or 0.01 to 0.4 mass% of BaO, there being not more than 0.3 mass% of additions of strontium and/or barium.

8. Transparent spinel ceramics according to Claim 2, wherein strontium and/or barium as additions are present in a concentration, expressed as SrO and/or BaO, of 0.01 to 0.2 mass% of SrO and/or 0.01 to 0.15 mass% of BaO, there being not more than 0.2 mass% of additions of strontium and/or barium.

9. Transparent spinel ceramics according to Claim 1, which at thicknesses of ≥ 3 mm, at least in the range of infrared wavelengths, measured between 1000 and 2500 nm, exhibit an in-line transmission of > 84%, advantageously > 85%.

10. Transparent spinel ceramics according to Claim 2, which at thicknesses of ≥ 3 mm, at least in the range of visible wavelengths, measured between 600 and 650 nm, exhibit an RIT of > 82%, advantageously > 84%.

11. Transparent spinel ceramics according to Claim 1 or 2, which contain visible defects larger than 20 µm with a frequency < 300/cm³.

12. Transparent spinel ceramics according to Claim 11, which contain visible defects larger than 20 µm with a frequency of 50 to 150/cm³.

13. Transparent spinel ceramics according to Claim 1 or 2, wherein there are Vickers hardnesses HV10 of ≥ 12.5 GPa.

14. Method for producing transparent spinel ceramics according to Claim 1, wherein the adding of in total not more than 0.5 mass% of additions of calcium and/or strontium and/or barium in a concentration, expressed in each case as oxide, of 0.005 to < 0.2 mass% CaO and/or 0.005 to < 0.5 mass% SrO and/or 0.005 to < 0.5 mass% BaO in the form of undissolved Ca-, Sr- and/or Ba-containing compounds and/or of Ca-, Sr- and/or Ba-containing compounds in solution in water and/or of Ca-, Sr- and/or Ba-containing compounds in solution in organic solvents is realized to magnesium aluminium spinel powder, the additions are distributed homogeneously and then the materials are sintered to form a transparent spinel ceramic.

15. Method for producing transparent spinel ceramics according to Claim 2, wherein the adding of in total not more than 0.3 mass% of additions of calcium and/or strontium and/or barium in a concentration, expressed in each case as oxide, of 0.005 to < 0.2 mass% CaO and/or 0.005 to < 0.3 mass% SrO and/or 0.005 to < 0.25 mass% BaO in the form of undissolved Ca-, Sr- and/or Ba-containing compounds and/or of Ca-, Sr- and/or Ba-containing compounds in solution in water and/or of Ca-, Sr- and/or Ba-containing compounds in solution in organic solvents is realized to magnesium aluminium spinel powder, the additions are distributed homogeneously and then the materials are sintered to form a transparent spinel ceramic.

16. Method according to Claim 14 or 15, wherein the adding of the additions is realized during the preparation of the slip or mix of the ceramic, or as part of impregnating or infiltrating the additions into open pores in a dry ceramic body, or by ion exchange between moist magnesium aluminium spinel bodies and Ca-, Sr- and/or Ba-containing solutions according to the invention.

## Revendications

1. Céramiques spinelles, qui sont transparentes dans des plages de longueurs d'onde de lumière infrarouge de 800 à 6 000 nm, constituées par un spinelle magnésium-aluminium fritté d'une taille de grain de structure moyenne ≤ 10 µm et contenant au total au plus 0,5 % en masse d'ajouts répartis de manière homogène de calcium et/ou de strontium et/ou de baryum, qui sont présents en une concentration, à chaque fois exprimée en termes d'oxydes, de 0,005 à < 0,2 % en masse de CaO et/ou 0,005 à < 0,5 % en masse de SrO et/ou 0,005 à < 0,5 % en masse de BaO, et qui présentent à des épaisseurs ≥ 3 mm au moins dans la plage de longueurs d'onde infrarouges, mesurée entre 1 000 et 2 500 nm, une transmission en ligne > 82 %.

2. Céramiques spinelles, qui sont transparentes dans des plages de longueurs d'onde de lumière visible de 350 à 750 nm, constituées
un spinelle magnésium-aluminium fritté d'une taille de grain de structure moyenne ≤ 10 µm et contenant au total au plus 0,3 % en masse d'ajouts répartis de manière homogène de calcium et/ou de strontium et/ou de baryum, qui sont présents en une concentration, à chaque fois exprimée en termes d'oxydes, de 0,005 à < 0,2 % en masse de CaO et/ou 0,005 à < 0,3 % en masse de SrO et/ou 0,005 à < 0,25 % en masse de BaO, et qui présentent à des épaisseurs ≥ 3 mm au moins dans la plage de longueurs d'onde visibles, mesurée entre 600 et 650 nm, une RIT > 80 %.

3. Céramiques spinelles transparentes selon la revendication 1 ou 2, dans lesquelles la taille de grain de structure moyenne du spinelle magnésium-aluminium fritté est < 5 µm, plus avantageusement < 2,5 µm, encore plus avantageusement < 1 µm.

4. Céramiques spinelles transparentes selon la revendication 1, dans lesquelles au total au plus 0,3 % en masse d'ajouts répartis de manière homogène sont présents.

5. Céramiques spinelles transparentes selon la revendication 2, dans lesquelles au total au plus 0,2 % en masse d'ajouts répartis de manière homogène sont présents.

6. Céramiques spinelles transparentes selon la revendication 1 ou 2, dans lesquelles du calcium est présent en tant qu'ajout en une concentration, exprimée en termes de CaO, de 0,01 à 0,1 % en masse.

7. Céramiques spinelles transparentes selon la revendication 1, dans lesquelles du strontium et/ou du baryum sont présents en tant qu'ajouts en une concentration, exprimée en termes de SrO et/ou BaO, de 0,01 à 0,4 % en masse de SrO et/ou 0,01 à 0,4 % en masse de BaO, au plus 0,3 % en masse d'ajouts de strontium et/ou de baryum étant présents.

8. Céramique spinelles transparentes selon la revendication 2, dans lesquelles du strontium et/ou du baryum sont présents en tant qu'ajouts en une concentration, exprimée en termes de SrO et/ou BaO, de 0,01 à 0,2 % en masse de SrO et/ou 0,01 à 0,15 % en masse de BaO, au plus 0,2 % en masse d'ajouts de strontium et/ou de baryum étant présents.

9. Céramiques spinelles transparentes selon la revendication 1, qui présentent à des épaisseurs ≥ 3 mm au moins dans la plage de longueurs d'onde infrarouges, mesurée entre 1 000 et 2 500 nm, une transmission en ligne > 84 %, plus avantageusement > 85 %.

10. Céramiques spinelles transparentes selon la revendication 2, qui présentent à des épaisseurs ≥ 3 mm au moins dans la plage de longueurs d'onde visibles, mesurée entre 600 et 650 nm, une RIT > 82 %, plus avantageusement > 84 %.

11. Céramiques spinelles transparentes selon la revendication 1 ou 2, qui contiennent des défauts visibles d'une taille supérieure à 20 µm en une fréquence < 300/cm³.

12. Céramiques spinelles transparentes selon la revendication 11, qui contiennent des défauts visibles d'une taille supérieure à 20 µm en une fréquence de 50 à 150/cm³.

13. Céramiques spinelles transparentes selon la revendication 1 ou 2, dans lesquelles des duretés de Vickers HV10 ≥ 12,5 GPa sont présentes.

14. Procédé de fabrication de céramiques spinelles transparentes selon la revendication 1, selon lequel l'ajout d'au total au plus 0,5 % en masse d'ajouts de calcium et/ou de strontium et/ou de baryum en une concentration, à chaque fois exprimée en termes d'oxydes, de 0,005 à < 0,2 % en masse de CaO et/ou 0,005 à < 0,5 % en masse de SrO et/ou 0,005 à < 0,5 % en masse de BaO est réalisé sous la forme de composés contenant Ca, Sr et/ou Ba non dissous et/ou de composés contenant Ca, Sr et/ou Ba dissous dans de l'eau et/ou de composés contenant Ca, Sr et/ou Ba dissous dans des solvants organiques à une poudre de spinelle de magnésium-aluminium, les ajouts sont répartis de manière homogène, puis les matériaux sont frittés en une céramique spinelle transparente.

15. Procédé de fabrication de céramiques spinelles transparentes selon la revendication 2, selon lequel l'ajout d'au total au plus 0,3 % en masse d'ajouts de calcium et/ou de strontium et/ou de baryum en une concentration, à chaque fois exprimée en termes d'oxydes, de 0,005 à < 0,2 % en masse de CaO et/ou 0,005 à < 0,3 % en masse de SrO et/ou 0,005 à < 0,25 % en masse de BaO est réalisé sous la forme de composés contenant Ca, Sr et/ou Ba non dissous et/ou de composés contenant Ca, Sr et/ou Ba dissous dans de l'eau et/ou de composés contenant Ca, Sr et/ou Ba dissous dans des solvants organiques à une poudre de spinelle de magnésium-aluminium, les ajouts sont répartis de manière homogène, puis les matériaux sont frittés en une céramique spinelle transparente.

16. Procédé selon la revendication 14 ou 15, selon lequel l'ajout des ajouts est réalisé pendant la préparation de la barbotine ou du mélange de la céramique, ou dans le cadre d'une imprégnation ou d'une infiltration des ajouts dans des pores ouverts d'un corps céramique sec, ou par échange d'ions entre des corps spinelles magnésium-aluminium humides et des solutions contenant Ca, Sr et/ou Ba selon l'invention.
